(19) Europäisches Patentamt
European Patent Office
Office européen des brevets

(11) **EP 4 178 244 A1**

(12) **EUROPEAN PATENT APPLICATION**

(43) Date of publication:
**10.05.2023 Bulletin 2023/19**

(21) Application number: **21207190.6**

(22) Date of filing: **09.11.2021**

(51) International Patent Classification (IPC):
**H04W 12/121** (2021.01)  **H04L 9/32** (2006.01)
**H04W 12/122** (2021.01)

(52) Cooperative Patent Classification (CPC):
**H04W 12/121; H04L 9/3271; H04W 12/122**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Norma Inc.**
**Seoul 04778 (KR)**

(72) Inventors:
• **Jung, Hyunchul**
 **Seoul (KR)**
• **Song, Chang Nyoung**
 **Seoul (KR)**

(74) Representative: **Grünecker Patent- und Rechtsanwälte**
**PartG mbB**
**Leopoldstraße 4**
**80802 München (DE)**

(54) **SYSTEM FOR DETECTING MITM ATTACK IN BLUETOOTH**

(57) According to an embodiment of the present disclosure, there is provided a Bluetooth MITM attack detection method including: a data exchange monitoring step of monitoring whether predetermined data is exchanged within a predetermined time between a slave device and a master device which are connected with each other for Bluetooth communication; and a step of, when the slave device and the master device are connected with each other, but the predetermined data is not exchanged within the predetermined time, determining that the master device is a Bluetooth MITM attacker, wherein the predetermined data includes information for enabling the master device to know a type of an available service and a state of the slave device.

[FIG. 1]

## Description

## BACKGROUND

1. Field

The present disclosure relates to a system for detecting a man-in-the-middle (MITM) attack in Bluetooth.

2. Description of the Related Art

Bluetooth refers to technology standards for wirelessly connecting portable devices, which includes mobile personal computers (PCs) or mobile phones, within a short range. For example, Bluetooth supports various digital devices to exchange voices and data by using a radio frequency of an industrial scientific medical (ISM) band of 245 MHz without a physical cable. For example, a Bluetooth communication module may be embedded in a mobile communication terminal or a laptop computer to support wireless communication. Due to such convenience, Bluetooth may be used in most of the digital devices including a personal digital assistant (PDA), a desktop, a facsimile machine, a keyboard, or a joystick.

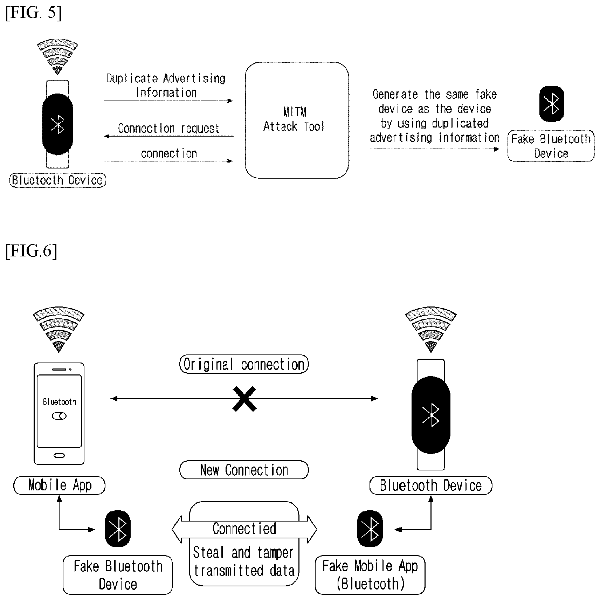

An MITM attack may occur on various types of devices, and Bluetooth devices may be subjected to such an MITM attack. Referring to FIG. 6, the MITM attack in Bluetooth typically cannot connect both ends (a smart device, a mobile application) simultaneously. Accordingly, the MITM attack in Bluetooth should use two types of Bluetooth (BLE) components which operate all together. One component is connected to a genuine mobile application and the other component is connected to a genuine smart device that. If the genuine smart device is connected to one of the components (a fake mobile application), the smart device may not post by itself or may not be connected to another application. In this case, the two types of components, a fake mobile application and a fake smart device, are connected the genuine smart device and the genuine mobile application, respectively, and transmit data received therefrom and perform eavesdropping and tampering through communication. As shown in the drawing, if the MITM attack succeeds, a hacker may steal and modify data transmitted through a Bluetooth channel.

## SUMMARY

According to an embodiment of the present disclosure, there is provided a system for detecting an MITM attack in Bluetooth in a computer.

According to an embodiment of the present disclosure, there is provided a method for detecting an MITM attack in Bluetooth in a computer.

According to an embodiment, there is a computer-readable medium having a program recorded thereon to execute a method for detecting an MITM attack in Bluetooth in a computer.

According to an embodiment of the present disclosure, there is provided a Bluetooth MITM attack detection method including: a data exchange monitoring step of monitoring whether predetermined data is exchanged within a predetermined time between a slave device and a master device which are connected with each other for Bluetooth communication; and a step of, when the slave device and the master device are connected with each other, but the predetermined data is not exchanged within the predetermined time, determining that the master device is a Bluetooth MITM attacker, wherein the predetermined data includes information for enabling the master device to know a type of an available service and a state of the slave device.

The method may further include a connection monitoring step of monitoring whether the slave device and the master device are connected with each other for Bluetooth communication, and the connection monitoring step may be performed before the data exchange monitoring step.

The slave device may perform the connection monitoring step and the data exchange monitoring step.

In addition, the method may further include: a connection termination monitoring step of, when the slave device and the master device are connected with each other, monitoring whether the connection is terminated after the predetermined data (first predetermined data) is exchanged within the predetermined time; a reconnection monitoring step of monitoring whether the master device and the slave device are reconnected with each other after the connection is terminated; a data reexchange monitoring step of monitoring whether predetermined data (second predetermined data) is exchanged within a predetermined time between the master device and the slave device when the master device and the salve device are reconnected with each other; and a step of, when the first predetermined data and the second predetermined data are different from each other, determining that the master device is a Bluetooth MITM attacker.

According to an embodiment of the present disclosure, there is provided a computer-readable recording medium having a computer program recorded thereon to execute a Bluetooth MITM attack detection method in a slave device, which is capable of performing Bluetooth communication with a master device, the method including: a connection monitoring step of monitoring whether the master device and the slave device are connected with each other for Bluetooth communication; a data exchange monitoring step of, when the master device and the slave device are connected with each other, monitoring whether predetermined data is exchanged within a predetermined time between the master device and the slave device; and a step of, when the slave device and the master device are connected with each other, but the predetermined data is not exchanged within the predetermined time, determining that the master device is an MITM attacker, wherein the predetermined data includes at least one of data indicating a connection parameter, data indicating a type of a service provided by the slave device, and data indicating a type of the slave device.

The method may further include: a connection termination monitoring step of, when the slave device and the master device are connected with each other, monitoring whether the connection is terminated after the predetermined data (first data) is exchanged within the predetermined time; a connection monitoring step of monitoring whether the master device and the slave device are reconnected with each other after the connection is terminated; and a step of, when the master device and the slave device are reconnected with each other, determining that the master device is a Bluetooth MITM attacker.

The method may further include a data exchange monitoring step of monitoring whether predetermined data (second data) is exchanged within a predetermined time between the master device and the slave device when the master device and the salve device are reconnected with each other, and wherein the step of determining may be a step of, when the master device and the slave device are reconnected with each other, and the first data and the second data are different from each other, determining that the master device is a Bluetooth MITM attacker.

According to an embodiment of the present disclosure, there is provided a computer-readable recording medium having a computer program recorded thereon to execute a Bluetooth MITM attack detection method in a slave device, which is capable of performing Bluetooth communication with a master device, the method including: a first connection monitoring step of monitoring whether the master device and the slave device are connected with each other for Bluetooth communication; a connection termination monitoring step of, when the slave device and the master device are connected with each other (first connection), monitoring whether the first connection is terminated; a second connection monitoring step of monitoring whether the master device and the slave device are reconnected with each other (second connection) after the first connection is terminated; and a step of determining that the master device is a Bluetooth MITM attacker when the second connection is established between the master device and the slave device.

The method may further include: a step of storing first predetermined data after the first connection is established between the slave device and the master device and predetermined data (first predetermined data) is exchanged within a predetermined time; and a data exchange monitoring step of monitoring whether predetermined data (second data)) is exchanged within a predetermined time between the master device and the slave device when the second connection is established between the master device and the slave device, and the step of determining may include a step of determining that the master device is the Bluetooth MITM attacker when the second connection is established between the master device and the slave device and the first data and the second data are different from each other.

According to one or more embodiments of the present disclosure, users using Bluetooth devices can safely access and use the Bluetooth devices.

According to one or more embodiments of the present disclosure, when a mobile device connects to Bluetooth devices, the mobile device can detect a threatening device beforehand.

## BRIEF DESCRIPTION OF THE DRAWINGS

The above and/or other aspects of the present disclosure will be more apparent by describing certain exemplary embodiments of the present disclosure with reference to the accompanying drawings, in which:

FIG. 1 is a view provided to explain a system for detecting an MITM attack in Bluetooth according to an embodiment of the present disclosure;
FIG. 2 is a view provided to explain a method for detecting an MITM attack in Bluetooth according to an embodiment of the present disclosure;
FIG. 3 is a view illustrating results of testing a relationship between a Bluetooth received signal strength indicator (RSSI) value and a distance; and
FIG. 4 is a view provided to explain a system and a method for detecting an MITM attack in Bluetooth according to the present disclosure;
FIG. 5 is a view provided to explain the system and the method for detecting the MITM attack in Bluetooth according to the present disclosure; and
FIG. 6 is a view provided to explain a related-art MITM attack in Bluetooth.

## DETAILED DESCRIPTION OF EMBODIMENTS

Preferred embodiments will now be described more fully with reference to the accompanying drawings to clarify aspects, other aspects, features and advantages of the present disclosure. The exemplary embodiments may, however, be embodied in many different forms and should not be construed as limited to the exemplary embodiments set forth herein. Rather, the exemplary embodiments are provided so that this disclosure will be thorough and complete, and will fully convey the scope of the application to those of ordinary skill in the art.

### Definition of Terms

In the detailed descriptions, the term 'software' refers to technology for moving hardware in a computer, the term 'hardware' refers to a tangible device or apparatus (a central processing unit (CPU), a memory 203, an input device, an output device, a peripheral device, etc.) constituting a computer, the term 'step' refers to a series of processes or operations connected in time series to achieve a predetermined object, the term 'program' refers to a set of commands suitable for processing by a computer, and the term 'program recording medium' refers to a computer-readable recording medium having a program installed therein, and having a program recorded thereon to execute or distribute.

In the detailed descriptions, terms such as first, second are used to describe various elements, but the elements should not be limited by such terms. These terms are used for the purpose of distinguishing one element from another element only. The exemplary embodiments explained and exemplified herein include their complementary embodiments.

As used herein, the singular forms "a", "an" and "the" are intended to include the plural forms as well, unless the context clearly indicates otherwise. It will be further understood that the terms "comprises" and/or "comprising," when used in the detailed descriptions, do not preclude the presence or addition of one or more other components.

In the detailed descriptions, the term 'management' has a meaning including 'receiving,' 'transmitting,' 'storing,' 'modifying,' or 'deleting' data.

In the detailed descriptions, 'component A and/or component B' refers to 'component A,' 'component B' or 'component A and component B.'

In the detailed descriptions, a 'computer' may include a computer processor and a storage device, an operating system, firmware, application programs, a network interface, an input and output interface, a bus, and resources. Herein, the operating system (OS) may operatively connect other hardware, firmware or application programs (for example, a management program). The network interface is configured to communicate with the outside, and refers to a module consisting of software and hardware, and may include, for example, a communication local area network (LAN) card. The storage device is a recording medium that can record a program and can be read by a computer, and for example, may include a memory or a permanent storage device which will be described below. The computer processor, the storage device, the operating system, the application programs, the firmware, the network interface, the input and output interface, the bus, other resources may be operatively connected with one another. The above-mentioned components are described and illustrated only for the purpose of explaining the present disclosure.

In the detailed descriptions, a component 'A' transmitting information, history, and/or data to a component 'B' means that the component 'A' directly transmits to the component 'B' or the component 'A' transmits to the component 'B' via at least one other component.

In the detailed descriptions, the term 'Bluetooth device' refers to a device that is provided with a wireless LAN card to be able to perform wireless communication of Bluetooth.

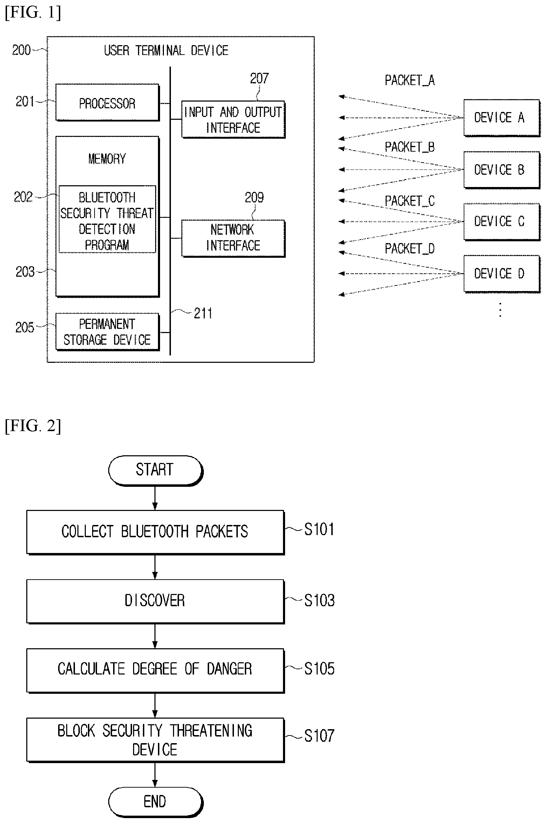

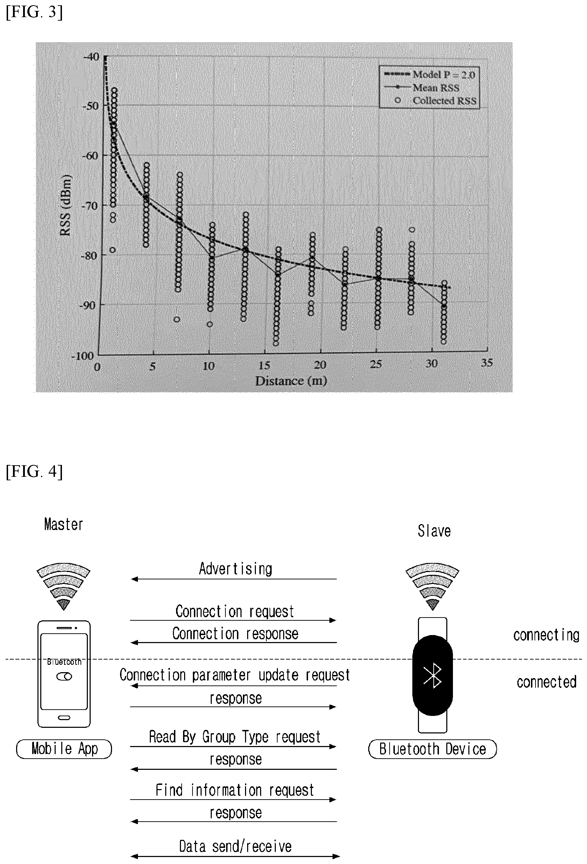

Hereinafter, embodiments of the present disclosure will be described in detail with reference to the accompanying drawings. FIGS. 1, 2, and 3 are views provided to explain a system and a method according to a first embodiment of the present disclosure, and FIGS. 4 and 5 are views provided to explain a system and a method according to a second embodiment of the present disclosure.

FIG. 1 is a view provided to explain a Bluetooth MITM attack detection system according to an embodiment of the present disclosure.

Referring to FIG. 1, the Bluetooth MITM attack detection system according to an embodiment includes a user terminal device 200 which has a program (hereinafter, referred to as a 'Bluetooth MITM attack detection program 202') installed therein to execute a Bluetooth MITM attack detection method through the user terminal device 200. For the purpose of explaining the present disclosure, FIG. 1 additionally illustrates Bluetooth devices A, B, C, D, ....

The user terminal device 200 includes a processor 201, a memory 203, a permanent storage device 205, an input and output interface 207, and a network interface 209. For example, the 'user terminal device 200' may be a computer, and for example, may include a desktop computer, a notebook computer, a smartphone, or a personal digital assistant (PDA).

The processor 201 may be a component for performing the Bluetooth MITM attack detection method, and may include a certain device capable of processing a sequence of instructions or may be a part thereof. The processor 201 may include, for example, a computer processor, a processor and/or a digital processor in a mobile device or another electronic device. The processor 201 may be included in, for example, a server computing device, a server computer, a series of server computers, a server farm, a cloud computer, a content platform, etc. The processor 210 may connect to the memory 203 via a bus 211.

The memory 203 may include a volatile memory, a performant memory, a virtual memory, or other memories which are used by the user terminal device 200 or store information outputted therefrom. The memory 203 may include, for example, a random access memory (RAM) and/or a dynamic RAM (DRAM).

The memory 203 may be used for storing certain information such as state information of the user terminal device 200. The memory 203 may also be used for storing instructions of the user terminal device 200 including instructions for performing the Bluetooth MITM attack detection method. The user terminal device 200 may include one or more processors if necessary or appropriate.

The bus 211 may include a communication-based structure enabling interactions between various components of the user terminal device 200. The bus 211 may transport data between components of the user terminal device 200, for example, between the processor 201 and the memory 203. The bus 211 may include a wireless and/or wired communication medium between components of the user terminal device 200, and may include parallel, series, or other topology arrangements.

The permanent storage device 205 may include such components as the memory 203 or other permanent storage devices which are used by the user terminal device 200 to store data for a predetermined extended period (for example, compared to the memory 230). The permanent storage device 205 may include a nonvolatile main memory which is used by the processor 201 in the user terminal device 200. The permanent storage device 205 may include, for example, a flash memory, a hard disk, an optical disk or other computer-readable media.

The input and output interface 207 may include interfaces for a keyboard, a mouse, a voice command input, a display, or other input or output devices. Configuration commands and/or an input for the Bluetooth MITM attack detection method may be received through the input and output interface 207.

The network interface 209 may include one or more interfaces for a short-range network or networks like Internet. The network interface 209 may include interfaces for wired or wireless connections. In the present embodiment, the network interface 209 may include an interface for Bluetooth communication (for example, a wireless LAN card for Bluetooth communication). The configuration commands and/or the input for the Bluetooth MITM attack detection method may be received through the network interface 209.

According to the present embodiment, the Bluetooth MITM attack detection program 202 may be loaded into the memory 203 and may be executed under control of the processor 201. The Bluetooth MITM attack detection program 202 may be stored in the permanent storage device 205, and may be loaded into the memory 203 and executed under control of the processor 201. Alternatively, at least part or entirety of the Bluetooth MITM attack detection program 202 may be stored in a permanent storage device (not shown) connected with the user terminal device 200 through a short-range network or an internet such as Internet, and may be downloaded to the user terminal device 200 according to a request of the user terminal device 200 and then may be loaded into the memory 203 and may be executed under control of the processor 201.

In alternative embodiments of the present disclosure, the user terminal device 200 may include more components than the components illustrated in FIG. 1. However, it will be understood by those skilled in the art that most of the related-art components are not illustrated in FIG. 1 since they do not need to be illustrated. For example, the user terminal device 200 may be implemented to include at least some of the input and output devices connected with the input and output interface 207, or may further include other components such as a transceiver, a global positioning system (GPS) module, a camera, various sensors like a geomagnetic sensor or an acceleration sensor, and a database, etc.

FIG. 2 is a view provided to explain a Bluetooth MITM attack detection method in a computer according to an embodiment, and FIG. 3 is a view illustrating results of testing a relationship between a Bluetooth RSSI value and a distance. Hereinafter, the Bluetooth MITM attack detection method performed by the Bluetooth MITM attack detection program 202 will be described with reference to FIGS. 1, 2, and 3.

According to an embodiment, the Bluetooth MITM attack detection method includes: a step (S101) of collecting Bluetooth packets transmitted from devices; a discovery step (S103) including an operation of discovering Bluetooth packets that have the same 'device name' ('device name overlapping Bluetooth packets'), by comparing information included in Bluetooth packets collected in the same time slot from among the collected Bluetooth packets; and a step (S105) of calculating an index indicating a degree of a dangerous device (a degree of danger) regarding each of the devices which have transmitted the Bluetooth packets, based on a result at the discovery step (S103). The Bluetooth MITM attack detection method may further include a security threatening device blocking step (S107) of informing a user of security threat devices, based on the degree of danger calculated according to a result at the danger calculation step (S105) and blocking a Bluetooth connection.

For example, the step (S105) of calculating the degree of danger may include an operation (first operation) of increasing the degree of danger of at least one device from among the devices which have transmitted the device name overlapping Bluetooth packets ('device name overlapping devices').

For example, the step of collecting (S101) may be an operation of receiving Bluetooth packets transmitted from the Bluetooth devices.

For example, the Bluetooth device A may broadcast its own Bluetooth packet PACKET_A to provide to the user terminal device 200, or may be connected with the user terminal device 200 to provide its own Bluetooth packet PACKET_A to the user terminal device 200. In the detailed descriptions, the transmission of the Bluetooth packet is not limited to a specific transmission method, and for example, may include any method like a broadcasting method or a connecting method.

For example, the discovery step (S103) includes an operation of comparing information included in the Bluetooth packets collected in the same time slot from among the collected Bluetooth packets. The operation of comparing may be, for example, comparing the Bluetooth packet PACKET_A transmitted by the device A, the Bluetooth packet PACKET_B transmitted by the device B, the Bluetooth packet PACKET_C transmitted by the device C, and the Bluetooth packet PACKET_D transmitted by the device D. The Bluetooth packet PACKET_A may include a 'device name,' a 'MAC address,' a 'Bluetooth connection state,' a 'class of device,' a 'device supporting service,' a 'Bluetooth type,' a 'received signal strength indicator (RSSI),' and 'manufacturer data.'

The same time slot refers to a time slot which is pre-set by the user like November 7, 2019, 10:00-11:00. The above-mentioned time slot, November 7, 2019, 10:00-11:00, is merely an example and the time slot may be set to be shorter or longer than the above-mentioned time slot.

The discovery step (S103) may be an operation of identifying whether at least one of the 'device name,' the 'MAC address,' the 'Bluetooth connection state,' the 'class of device,' the 'device supporting service,' the 'Bluetooth type,' the 'RSSI,' and the 'manufacturer' is identical, by comparing information included in all of the Bluetooth packets collected in the same time slot. Herein, the 'manufacturer' indicates a manufacturer of the wireless LAN card installed in the devices for Bluetooth communication, the 'MAC address' refers to a unique identifier allocated to the wireless LAN card, the 'RSSI' refers to a signal strength of each packet when the network interface 209 receives the Bluetooth packets, the 'class of device' refers to a class of device of Bluetooth devices (for example, a personal computer (for example, a notebook computer), a smartphone, etc.), and the 'device name' refers to a name that is given to each device.

The discovery step (S103) may include an operation of discovering Bluetooth packets having the same 'device name' (hereinafter, the 'device name overlapping Bluetooth packets') by comparing information included in all of the Bluetooth packets collected in the same time slot. When devices having transmitted the Bluetooth packets having the same 'device name' (hereinafter, 'device name overlapping devices') are discovered as a result of performing the above-described operation, the degree of danger of the device name overlapping devices may increase. For example, when the device name of the device A and the device name of the device C are the same as each other, any one of the degree of danger of the device A and the degree of danger of device C may increase. This is because any one of the device A and the device C may be a fake device which is made by a hacker.

For example, the discovery step (S103) may further include at least one operation of an operation of discovering Bluetooth packets having the same 'manufacturer' ('manufacturer overlapping Bluetooth packets') by comparing information included in the Bluetooth packets collected in the same time slot from among the Bluetooth packets PACKET_A, PACKET_B, PACKET_C, PACKET_D, ....), and an operation of discovering Bluetooth packets having the same 'MAC address' ('MAC address overlapping Bluetooth packets') by comparing information included in the Bluetooth packets collected in the same time slot from among the Bluetooth packets PACKET A, PACKET_B, PACKET_C, PACKET_D, ....). When devices having transmitted the Bluetooth packets having the same 'manufacturer' (hereinafter, 'manufacturer overlapping devices') and devices having transmitted the Bluetooth packets having the same 'MAC address' (hereinafter, 'MAC address overlapping devices') are discovered as a result of performing these operations, the degree of danger of the manufacturer overlapping devices and the MAC address overlapping devices may increase.

For example, when the manufacturer of the device B and the manufacturer of the device D are the same as each other, any one of the degree of danger of the device B and the degree of danger of the device D may increase. This is because any one of the device B and the device D may be a fake device which is made by a hacker. In another example, when the MAC address of the device B and the MAC address of the device D are the same as each other, any one of the degree of danger of the device B and the degree of danger of the device D may increase.

For example, the discovery step (S103) may further include an operation of discovering a device the 'class of device' of which is a personal computer from among the device name overlapping devices. The discovery step (S103) may perform the operation of discovering the device name overlapping devices, and then, may perform an operation of identifying whether the 'class of device' included in the Bluetooth packets of the discovered device name overlapping devices is a personal computer. When there exists a device the 'class of device' of which is the personal computer from among the device name overlapping devices, the degree of danger of such a device may increase. For example, when the device name of the device A and the device name of the device C are the same as each other, and the 'class of device' of the device C is the personal computer, the degree of danger of the device C may increase.

For example, the discovery step (S103) may further include at least one of an operation of discovering a device the 'class of device' of which is the personal computer from among the devices having transmitted the manufacturer overlapping Bluetooth packets, and an operation of discovering a device the 'class of device' of which is the personal computer from among the devices having transmitted the MAC address overlapping Bluetooth packets.

For example, the discovery step (S103) may include an operation of, when the manufacturer of the device B and the manufacturer of the device D are the same as each other, discovering a device the 'class of device' of which is the personal computer out of the device B and the device D. In addition, the discovery step (S103) may include an operation of, when the MAC address of the device A and the MAC address of the device C are the same as each other, discovering a device the 'class of device' of which is the personal computer out of the device A and the device C. The discovery step (S103) may include at least one of the operation of discovering a device the 'class of device' of which is the personal computer out of the device B and the device D which have the same manufacturer, and the operation of discovering a device the 'class of device' of which is the personal computer out of the device A and the device C which have the same MAC address.

When there exists a device the 'class of device' of which is the personal computer from among the devices having transmitted the manufacturer overlapping Bluetooth packets, the degree of danger of the device may increase. In addition, when there exists a device the 'class of device' of which is the personal computer from among the devices having transmitted the MAC address overlapping Bluetooth packets, the degree of danger of the device may increase.

For example, the discovery step (S103) may further include an operation of discovering a device the 'device name' of which is longer than a pre-defined criterion, based on the information included in the collected Bluetooth packets PACKET_A, PACKET_B, PACKET_C, PACKET_D, .... The pre-defined criterion may be 10 Korean letters or less, for example. The 'device name' of '노르마 (no-rue-ma)' has three letters, and the 'device name' of '가산구로디지털단지케이티 (ka-san-gu-ro-di-gi-tal-dan-ji-k-i-ti)' has 12 letters. The above-described criterion, the 10 Korean letters, are merely an example and it will be easily understood by those skilled in the art that the present disclosure is not limited to such a criterion. A case in which a hacker makes the device name longer and intentionally generates an overflow may be reflected.

For example, the discovery step (S103) may further include an operation of discovering a device the 'RSSI' value of which is lower than a pre-set reference value, based on the information included in the collected Bluetooth packets PACKET_A, PACKET_B, PACKET_C, PACKET_D, ....

For example, the pre-set reference value regarding the 'RSSI' value may be -80 dBm. In this case, the discovery step (S103) may perform an operation of discovering devices the 'RSSI' of which is -80 dBm or less, based on the information included in the collected Bluetooth packets PACKET_A, PACKET_B, PACKET_C, PACKET_D, .... As will be described below, the step of calculating the degree of danger (S105) may include increasing the degree of danger of the device the 'RSSI' value of which is lower than the pre-set reference value. For example, the degree of danger may be increased by 3.

For example, the discovery step (S103) may further include an operation of discovering a device the 'RSSI' value of which is changed more than a pre-set change value, based on the information included in the collected Bluetooth packets PACKET_A, PACKET_B, PACKET_C, PACKET_D, .... The pre-set change value may be, for example, ±20 dBm. In this case, the discovery step (S103) may perform an operation of discovering devices the 'RSSI' of which is changed by ±20 dBm or more, based on the information included in the collected Bluetooth packets PACKET_A, PACKET_B, PACKET_C, PACKET_D, .... As will be described below, the step of calculating the degree of danger (S105) may include increasing the degree of danger of the device the 'RSSI' value of which is changed more than the pre-set change value. For example, the degree of danger may be increased by 3.

Referring to FIG. 3, a relationship between the 'RSSI' value and a distance to the Bluetooth device (a distance between the user terminal device 200 and the Bluetooth device) can be seen. In the present embodiment, the graph reflects experiential results that, as the distance between the Bluetooth device and the user terminal device 200 collecting the Bluetooth packets increases, and a change in the 'RSSI' value is greater, there is a higher probability that security is threatened.

For example, the step of collecting (S101) may include an operation of collecting the Bluetooth packets PACKET_A, PACKET_B, PACKET_C, PACKET_D, ... transmitted from the devices A, B, C, D, ... in a first time slot, and an operation of collecting Bluetooth packets PACKET'_A, PACKET'_B, PACKET'_C, PACKET'_D, ... transmitted from the devices A, B, C, D, ... in a second time slot which is different from the first time slot.

For example, the discovery step (S103) may further include an operation of discovering a device the information of which is changed, by comparing information included in the Bluetooth packets collected in the first time slot and information included in the Bluetooth packets collected in the second time slot. When the device the information of which is changed as a result of performing the discovery step (S104), the step of calculating the degree of danger (S105) may further include an operation of increasing the degree of danger of the device the information of which is changed.

In the present embodiment, the information to be compared may be at least one of a 'device name,' a 'MAC address,' a 'Bluetooth connection state', a 'class of device,' a 'device supporting service,' a 'Bluetooth type,' an 'RSSI', and 'manufacturer data' included in the Bluetooth packets PACKET'_A, PACKET'_B, PACKET'_C, PACKET'_D, .... For example, the first time slot may be November 7, 2019, 10:00-11:00, and the second time slot may be November 7, 2019, 12:00-13:00. This setting is to detect a case where a hacker does not exist in the first time slot but appears in the second time slot. That is, this is to detect a case where a device (threatening device) of the hacker appearing in the second time slot hacks another device and duplicates information of the hacked device.

For example, the step of calculating the degree of danger (S105) may be a step (S105) of calculating the degree of danger of each of the devices A, B, C, D, ... which are targets for collecting the Bluetooth packets PACKET_A, PACKET_B, PACKET_C, PACKET_D, ....

The step of calculating the degree of danger (S105) may be a step (S105) of calculating the degree of danger of each of the manufacturer overlapping devices, the device name overlapping devices, the MAC address overlapping devices, the devices the information of which is changed with time, the devices the 'RSSI' value of which is less than or equal to a reference value, the devices the 'RSSI' value of which is changed by a pre-set change value or more, among the devices A, B, C, D, ... which are the targets for collecting the Bluetooth packets PACKET_A, PACKET_B, PACKET_C, PACKET-D, ....

According to an embodiment, the degree of danger may be classified into 'low', 'high', 'highest'. The degree of danger may be set to 'low' when the score of the degree of danger is from 0 to 4, the degree of danger may be set to 'high' when the score is from 5 to 9, and the degree of danger may be set to 'highest' when the score is 10 or higher.

For example, the step of calculating the degree of danger (S105) may include increasing the score of the degree of danger of a corresponding device by a pre-defined score every time the device corresponds to the manufacturer overlapping device, the device name overlapping device, the MAC address overlapping device, the device the information of which is changed with time, the device the 'RSSI' value of which is less than or equal to the reference value, or the device the 'RSSI' value of which is changed by the pre-set change value or more.

The method of classifying the degree of danger or calculating the score described above is merely an example, and the present disclosure is not limited thereto. The degree of danger may be stored in the memory 230 or the permanent storage device 205.

For example, the step of calculating the degree of danger (S105) may include an operation (also referred as "first operation" hereinafter) of increasing the degree of danger of at least one device from among the device name overlapping devices. Herein, the first operation may be an operation of, when there exists a device the 'class of device' of which is a personal computer from among the device name overlapping devices as a result of performing the discovery step (S103), increasing the degree of danger of such a device. Specifically, the first operation may be an operation of increasing the degree of danger of the device which is the device name overlapping device and the 'class of device' of which is the personal computer by 10 scores.

For example, the step of calculating the degree of danger (S105) may further include at least one operation of an operation (also referred as "second operation" hereinafter) of increasing the degree of danger of a device the 'class of device' of which is a personal computer, from among the manufacturer overlapping devices which are discovered as a result of performing the discovery step (S103), and an operation (also referred as "third operation" hereinafter) of increasing the degree of danger of a device the 'class of device' of which is a personal computer, from among the MAC address overlapping devices.

That is, the second operation may be an operation of increasing the degree of danger of the device which is the manufacturer overlapping device and the 'class of device' of which is the personal computer, and the third operation may be an operation of increasing the degree of danger of the device which is the MAC address overlapping device and the 'class of device' of which is the personal computer. Specifically, the second operation may be an operation of increasing the degree of danger of the device which is the manufacturer overlapping device and the 'class of device' of which is the personal computer by '3' scores, and the third operation may be an operation of increasing the degree of danger of the device which is the MAC address overlapping device and the 'class of device' of which is the personal computer by '10' scores.

For example, the step of calculating the degree of danger (S105) may further include an operation (also referred as "fourth operation" hereinafter) of, when a device the 'device name' of which is longer than a pre-defined criterion is discovered based on the information included in the Bluetooth packets PACKET_A, PACKET_B, PACKET_C, PACKET_D, ... as a result of performing the discovery step (S103), increasing the degree of danger of such a device.

That is, the fourth operation may be increasing the degree of danger differently according to how longer the length of the 'device name' is than the pre-defined criterion. For example, when the pre-defined criterion is 10 Korean letters, the step of calculating the degree of danger (S105) may be performed to increase the degree of danger by 3 if the length of the 'device name' is greater than or equal to 24 letters and less than 50 letters, and to increase the degree of danger by 5 if the length of the 'device name' is greater than or equal to 50 letters.

For example, the step of calculating the degree of danger (S105) may further include an operation (also referred as "fifth operation" hereinafter) of increasing the degree of danger of a device the information of which is changed, when there is a difference between the information included in the Bluetooth packets PACKET_A, PACKET_B, PACKET_C, PACKET_D, ... collected in the first time slot, and the information included in the Bluetooth packets PACKET'_A, PACKET'_B, PACKET'_C, PACKET'_D, ... collected in the second time slot. That is, when there exists a device in which the information included in the Bluetooth packets PACKET A, PACKET B, PACKET-C, PACKET D,... is changed with time, the degree of danger of such a device will be increased. For example, the fifth operation may be an operation of increasing the degree of danger of the device the information of which is changed by 10. Herein, the changed information may be, for example, any one of the 'device name,' 'MAC address,' 'Bluetooth connection state,' 'class of device', 'device supporting service', 'Bluetooth type', 'RSSI', and 'manufacturer data'.

For example, the step of calculating the degree of danger (S105) may include increasing the degree of danger of a device in which the 'RSSI' value of the collected Bluetooth packets PACKET_A, PACKET_B, PACKET-C, PACKET_D, ... is smaller than a pre-set reference value, as a result of performing the discovery step (S103). For example, the degree of danger may be increased by 3.

For example, the step of calculating the degree of danger (S105) may include increasing the degree of danger of a device the 'RSSI' value of which is changed more than the pre-set change value, based on the 'RSSI' value of the Bluetooth packets PACKET_A, PACKET_B, PACKET-C, PACKET_D, ..., as a result of performing the discovery step (S103). For example, the degree of danger may be increased by 3.

For example, the numerical value for increasing the degree of danger (for example, 3, 10) at the step of calculating the degree of danger (S1050) is merely an example, and other numerical values may be applied.

## Second Embodiment

An MITM attack detection system according to a second embodiment of the present disclosure will be described hereinbelow with reference to FIGS. 4, 5, and 6.

Referring to FIG. 4, a normal Bluetooth connection process between a master device (for example, a smartphone) and a slave device (for example, a Bluetooth device (simply referred to as a 'device')) will be described. When the Bluetooth device advertises, the smartphone may identify the corresponding device and then may request a connection, and, when the device approves the connection, the connection is completed.

After the connection is completed, the smartphone and the device may proceed with a procedure (for example, a discovery procedure) for exchanging information. The discovery procedure is a procedure for enabling the user terminal device to know a type of an available service and a state of the Bluetooth device, and through the discover procedure, the user terminal device and the Bluetooth device exchange information regarding a service, characteristics, an attribute of the device. Herein, the service is a combination of behaviors related to data, and defines a basic operation of the device. The behavior refers to a data format that is defined as a universally unique identifier (UUID), and the characteristics are data values that are used in the service. The variety of information described above is defined by the Bluetooth special interest group (SIG).

FIG. 4 schematically illustrates a part of the discovery procedure. After the connection between the smartphone ("Master") and the Bluetooth device ("Slave") is completed, the Bluetooth device transmits requests data regarding a connection parameter (connection parameter update) and the smartphone responds to the requests. The smartphone requests data regarding a device type and a service type of the Bluetooth device (Read by Group/Type, Find Information, etc.) in sequence or simultaneously, the Bluetooth device transmits device information and information of various services, characteristics, attribute in response to the respective requests. Such a data exchanging operation may be performed directly after the connection is accomplished, and data may be exchanged according to a defined protocol after the above-described information is exchanged.

Referring to FIG. 5, a Bluetooth MITM attack tool duplicates advertising information (a MAC address, a device name, a type, a manufacturer, etc.) of a target Bluetooth device, and generates a fake device (also referred as "first fake device" hereinafter) which is the same as the target Bluetooth device by using the information. The MITM attack tool establishes a connection with the target Bluetooth device. The MITM attack tool does not exchange data regarding the connection parameter update request, the Read by Group request, the Read by Type request, the device information data request, etc. Since the connection between the MITM attack tool and the Bluetooth is established, the target Bluetooth device does not advertise anymore, and only the first fake device advertises and waits for a connection by a smartphone.

Referring to FIG. 6, when a smartphone is connected to the first fake device, the MITM attack tool captures and collects information of the smartphone and the MITM attack tool acts as a fake device (also referred as "second fake device" hereinafter) of the smartphone. That is, the MITH attack tool terminates the original connection between the MITH attack tool and the Bluetooth and then makes re-connection between the second fake device and the Bluetooth device. When the connection of the MITM attack tool between the smartphone and the Bluetooth device is completed, The MITM attack tool may be positioned between the two devices, and may transmit data according to a defined protocol after exchanging information such as the connection parameter update request, the Read by Group/Type request, the device information data request, etc.

As described above, when there is a Bluetooth MITM attack, there is a wait for generation of the fake device and connection of the smartphone, and accordingly, information exchange and data exchange are not directly performed after the connection.

Accordingly, the Bluetooth MITM attack detection system according to an embodiment determines that there is an MITM attack when a connection parameter update request and information exchange requests (Read by Group/Type, Device information data, etc.) are not transmitted immediately after a connection is completed at the slave device.

The Bluetooth MITM attack detection system according to another embodiment determines that there is an MITM attack when a device confirmation protocol (requested by the slave device) is determined between the slave device and the master device, a connection is established, and then, the corresponding protocol is performed, but the master device does not directly respond.

When there is the MITM attack, the MITM attack tool may steal information (MAC address) of the smartphone when connecting to the smartphone, and then, may make a fake device (i.e., the second fake device) reflecting the information of the smartphone after the connection is terminated, and may reconnect to the Bluetooth device. Whereas, when the genuine smartphone connects to the Bluetooth device, the smartphone usually does not disconnect and reconnects to the Bluetooth device immediately. Based on this point, the Bluetooth MITM attack detection system according to an embodiment may enable reconnection to the Bluetooth device only after a predetermined time is elapsed after the connection to the Bluetooth device is terminated.

The MITM attack detection system according to the second embodiment may be implemented by the system shown in FIG. 1. Alternatively, the MITM attack detection system according to the second embodiment may be implemented in each of the Bluetooth device.

In one embodiment, the Bluetooth MITM attack detection program 202 may perform operations according to the second embodiment. Accordingly, the Bluetooth MITM attack detection program 202 according to the second embodiment may determine that there is an MITM attack when connection parameter update request/response and information exchange requests (Read by Group/Type, Device information data, etc.) are not directly transmitted after a connection is completed at the slave device.

In another embodiment, the Bluetooth MITM attack detection program 202 according to the second embodiment may determine that there is an MITM attack when a device confirmation protocol (requested by the slave device) is determined between the slave device and the master device, a connection is established, and then, the corresponding protocol is performed, but the master device does not directly respond.

In another embodiment, the Bluetooth MITM attack detection program 202 according to the second embodiment may determine that there is an MITM attack when connection parameter update request/response and information exchange requests (Read by Group/Type, Device information data, etc.) are not directly transmitted after a connection is completed at the slave device, or when a device confirmation protocol (requested by the slave device) is determined between the slave device and the master device, a connection is established, and then, the corresponding protocol is performed, but the master device does not directly respond.

Alternatively, the Bluetooth MITM attack detection program 202 according to the second embodiment may determine that there is an MITM attack when connection parameter update request/response and information exchange requests (Read by Group/Type, Device information data, etc.) are not directly transmitted after a connection is completed at the slave device, and when a device confirmation protocol (requested by the slave device) is determined between the slave device and the master device, a connection is established, and then, the corresponding protocol is performed, but the master device does not directly respond.

The Bluetooth MITM attack detection program 202 according to the second embodiment may monitor whether the Bluetooth device is directly reconnected after being disconnected when being actually used, and, when it is determined that the Bluetooth device is directly reconnected, the Bluetooth MITM attack detection program 202 may determine that there is an MITM attack. In this case, the Bluetooth MITM attack detection program 202 according to the second embodiment may enable the reconnection after a predetermined time is elapsed after the Bluetooth device is disconnected.

The Bluetooth MITM attack detection method according to the second embodiment will be described hereinafter.

For example, the Bluetooth MITM attack detection method according to the second embodiment may include: a step of monitoring whether connection parameter update request/response and information exchange requests (Read by Group/Type, Device information data, etc.) are transmitted directly after a connection is completed at the slave device; and a step of determining that there is an MITM attack when the requests/responses are not directly transmitted as a result of monitoring. Herein, a criterion for determining whether the requests/responses are directly transmitted may be a time such as 10 seconds, 20 second, 30 seconds, or 1 minute. These numerical values are merely examples and the present disclosure is not limited thereto.

In another example, the Bluetooth MITM attack detection method according to the second embodiment may include: a step of, when a device confirmation protocol (requested by the salve device) is determined between the slave device and the master device, a connection is established, and then the corresponding protocol is performed, monitoring whether the master device directly responds; and a step of determining that there is an MITM attack when the master device does not directly respond as a result of monitoring. Herein, a criterion for determining whether the master device directly responds may be a time such as 10 seconds, 20 second, 30 seconds, or 1 minute. These numerical values are merely examples and the present disclosure is not limited thereto.

In still another example, the Bluetooth MITM attack detection method according to the second embodiment may include: a first monitoring step of monitoring whether connection parameter update request/response and information exchange requests (Read by Group/Type, Device information data, etc.) are transmitted directly after a connection is completed at the slave device; a second monitoring step of, when a device confirmation protocol (requested by the salve device) is determined between the slave device and the master device, a connection is established, and then the corresponding protocol is performed, monitoring whether the master device directly responds; and a step of determining that there is an MITM attack when the corresponding procedure is not directly performed as a result of the first monitoring or the second monitoring. Herein, a criterion for determining whether the corresponding procedure is directly performed may be a time such as 10 seconds, 20 second, 30 seconds, or 1 minute. These numerical values are merely examples and the present disclosure is not limited thereto.

In yet another example, the Bluetooth MITM attack detection method according to the second embodiment may include: a first monitoring step of monitoring whether connection parameter update request/response and information exchange requests (Read by Group/Type, Device information data, etc.) are transmitted directly after a connection is completed at the slave device; a second monitoring step of, when a device confirmation protocol (requested by the salve device) is determined between the slave device and the master device, a connection is established, and then the corresponding protocol is performed, monitoring whether the master device directly responds; and a step of determining that there is an MITM attack when both the two procedures are not directly performed as a result of the first monitoring and a result of the second monitoring. Herein, a criterion for determining whether the two procedures are directly performed may be a time such as 10 seconds, 20 second, 30 seconds, or 1 minute. These numerical values are merely examples and the present disclosure is not limited thereto.

In further example, the Bluetooth MITM attack detection method according to the second embodiment may include: a step of monitoring whether the Bluetooth device is reconnected directly after being disconnected when being actually used; and a step of determining that there is an MITM attack when the Bluetooth device is directly reconnected as a result of monitoring. In the present embodiment, the Bluetooth MITM attack detection method may further include a step of enabling reconnection after a predetermined time is elapsed after the Bluetooth connection is terminated.

In this case, some embodiments of the discovery step (S103) of FIG. 2 may be applied to the second embodiment. For example, when the Bluetooth device is connected for the first time, disconnected, and then reconnected directly, and when there is a change in information of the corresponding Bluetooth device, it may be determined that the connecting operation by the corresponding Bluetooth device is an MITM attack.

That is, the Bluetooth MITM attack detection method according to the second embodiment may further include: a connection termination monitoring step of monitoring whether a connection between the slave device and the master device is terminated after predetermined data (first predetermined data) for exchanging information is exchanged within a predetermined time; a reconnection monitoring step of monitoring whether the master device and the slave device are reconnected after the connection is terminated; a data re-exchange monitoring step of, when the master device and the slave device are reconnected, monitoring whether predetermined data (second predetermined data) for exchanging information is exchanged between the master device and the slave device within a predetermined time; and a step of, when the first predetermined data and the second predetermined data are different from each other, determining that there is a Bluetooth MITM attack.

The Bluetooth MITM attack detection method according to the second embodiment may define a degree of danger for determining an MITM attack, and may determine the MITM attack according to the following equation, for example:

$$a*50+b*60=\text{Degree of Danger}$$

The Bluetooth MITM attack detection method according to the second embodiment may determine that there is an MITM attack 100% when the degree of danger is 100, and may notify a user of the MITM attack 100%.

For example, the Bluetooth MITM attack detection method according to the second embodiment may monitor whether connection parameter update request/response and information exchange requests (Read by Group/Type, Device information data, etc.) are transmitted directly after a connection is completed at the slave device, and, when the requests and responses are not directly transmitted as a result of monitoring, may set the variable 'a' to '1'. When the requests and responses are directly transmitted as a result of monitoring, the variable 'a' may be set to '0'.

In addition, the Bluetooth MITM attack detection method according to the second embodiment may monitor whether the master device directly responds when a device confirmation protocol (requested by the salve device) is determined between the slave device and the master device, a connection is established, and then the corresponding protocol is performed, and may set the variable 'b' to '1' when the master device does not directly responds as a result of monitoring, and may set the variable 'b' to '0' when the master device directly responds as a result of monitoring. By reflecting the results of determining the variables 'a' and 'b' and summing up the results, the degree of danger can be more reliably determined.

While the present disclosure has been shown and described with reference to certain preferred embodiments thereof, it will be understood by those skilled in the art that various changes in form and details may be made therein without departing from the spirit and scope of the present disclosure as defined by the appended claims. Therefore, the scope of the present disclosure is defined not by the detailed descriptions of the present disclosure but by the appended claims, and all differences within the scope will be construed as being included in the present disclosure.

Explanation of Signs

10:      Bluetooth MITM attack detection system

200:     user terminal device

201:     processor
202:     Bluetooth MITM attack detection program
203:     memory
205:     permanent storage device
207:     input and output interface
209:     network interface
211:     bus

**Claims**

1. A Bluetooth MITM attack detection method comprising:

   a data exchange monitoring step of monitoring whether predetermined data is exchanged within a predetermined time between a slave device and a master device which are connected with each other for Bluetooth communication; and
   a step of, when the slave device and the master device are connected with each other, but the predetermined data is not exchanged within the predetermined time, determining that the master device is a Bluetooth MITM attacker,
   wherein the predetermined data comprises information for enabling the master device to know a type of an available service and a state of the slave device.

2. The method of claim 1, further comprising a connection monitoring step of monitoring whether the slave device and the master device are connected with each other for Bluetooth communication, wherein the connection monitoring step is performed before the data exchange monitoring step.

3. The method of claim 2, wherein the slave device is configured to perform the connection monitoring step and the data exchange monitoring step.

4. The method of claim 2, further comprising:

   a connection termination monitoring step of, when the slave device and the master device are connected with each other, monitoring whether the connection is terminated after the predetermined data (first predetermined data) is exchanged within the predetermined time;

   a reconnection monitoring step of monitoring whether the master device and the slave device are reconnected with each other after the connection is terminated;
   a data re-exchange monitoring step of monitoring whether predetermined data (second predetermined data) is exchanged within a predetermined time between the master device and the slave device when the master device and the salve device are reconnected with each other; and
   a step of, when the first predetermined data and the second predetermined data are different from each other, determining that the master device is a Bluetooth MITM attacker.

5. A computer-readable recording medium having a computer program recorded thereon to execute a Bluetooth MITM attack detection method in a slave device, which is capable of performing Bluetooth communication with a master device, the method comprising:

   a connection monitoring step of monitoring whether the master device and the slave device are connected with each other for Bluetooth communication;
   a data exchange monitoring step of, when the master device and the slave device are connected with each other, monitoring whether predetermined data is exchanged within a predetermined time between the master device and the slave device; and
   a step of, when the slave device and the master device are connected with each other, but the predetermined data is not exchanged within the predetermined time, determining that the master device is an MITM attacker,
   wherein the predetermined data comprises at least one of data indicating a connection parameter, data indicating a type of a service provided by the slave device, and data indicating a type of the slave device.

6. The computer-readable recording medium of claim 5, wherein the method further comprises:

   a connection termination monitoring step of, when the slave device and the master device are connected with each other, monitoring whether the connection is terminated after the predetermined data (first data) is exchanged within the predetermined time;
   a connection monitoring step of monitoring whether the master device and the slave device are reconnected with each other after the connection is terminated; and
   a step of, when the master device and the slave device are reconnected with each other, determining that the master device is a Bluetooth MITM attacker.

7. The computer-readable recording medium of claim 6, wherein the method further comprises a data exchange monitoring step of monitoring whether predetermined data (second data) is exchanged within a predetermined time between the master device and the slave device when the master device and the salve device are reconnected with each other, and
wherein the step of determining is a step of, when the master device and the slave device are reconnected with each other, and the first data and the second data are different from each other, determining that the master device is a Bluetooth MITM attacker.

8. A computer-readable recording medium having a computer program recorded thereon to execute a Bluetooth MITM attack detection method in a slave device, which is capable of performing Bluetooth communication with a master device, the method comprising:

a first connection monitoring step of monitoring whether the master device and the slave device are connected with each other for Bluetooth communication;
a connection termination monitoring step of, when the slave device and the master device are connected with each other (first connection), monitoring whether the first connection is terminated;
a second connection monitoring step of monitoring whether the master device and the slave device are reconnected with each other (second connection) after the first connection is terminated; and
a step of determining that the master device is a Bluetooth MITM attacker when the second connection is established between the master device and the slave device.

9. The computer-readable recording medium of claim 8, wherein the method further comprises:

a step of storing first predetermined data after the first connection is established between the slave device and the master device and predetermined data (first predetermined data) is exchanged within a predetermined time; and
a data exchange monitoring step of monitoring whether predetermined data (second data)) is exchanged within a predetermined time between the master device and the slave device when the second connection is established between the master device and the slave device, wherein the step of determining comprises a step of determining that the master device is the Bluetooth MITM attacker when the second connection is established between the master device and the slave device and the first data and the second data are different from each other.

[FIG. 1]

[FIG. 2]

[FIG. 3]

[FIG. 4]

[FIG. 5]

[FIG.6]

Europäisches
Patentamt
European
Patent Office
Office européen
des brevets

# EUROPEAN SEARCH REPORT

Application Number

**EP 21 20 7190**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MUHAMMED ALI YURDAGUL ET AL: "BLEKeeper: Response Time Behavior BasedMan-In-The-Middle Attack Detection", ARXIV.ORG, CORNELL UNIVERSITY LIBRARY, 201 OLIN LIBRARY CORNELL UNIVERSITY ITHACA, NY 14853, 30 March 2021 (2021-03-30), XP081919442, * the whole document * | 1-9 | INV. H04W12/121 H04L9/32 H04W12/122 |
| A | CAYRE ROMAIN ET AL: "InjectaBLE: Injecting malicious traffic into established Bluetooth Low Energy connections", 2021 51ST ANNUAL IEEE/IFIP INTERNATIONAL CONFERENCE ON DEPENDABLE SYSTEMS AND NETWORKS (DSN), IEEE, 21 June 2021 (2021-06-21), pages 388-399, XP033953966, DOI: 10.1109/DSN48987.2021.00050 [retrieved on 2021-08-02] * the whole document * | 1-9 | |

TECHNICAL FIELDS SEARCHED (IPC)

H04W
H04L

The present search report has been drawn up for all claims

| Place of search | Date of completion of the search | Examiner |
|---|---|---|
| Munich | 4 April 2022 | Yanai, Yoav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)